# EUROPÄISCHE PATENTSCHRIFT

(11) **EP 3 512 739 B1**
(45) Veröffentlichungstag und Bekanntmachung des Hinweises auf die Patenterteilung: **13.05.2020**
(21) Anmeldenummer: 17739973.0
(22) Anmeldetag: 14.07.2017
(51) Int. Cl.: B60R 1/00

(54) **VERFAHREN ZUM BEREITSTELLEN EINER RÜCKSPIEGELANSICHT EINER FAHRZEUGUMGEBUNG EINES FAHRZEUGS**
METHOD FOR PROVIDING A REAR-VIEW-MIRROR VIEW OF THE SURROUNDINGS OF A VEHICLE
PROCÉDÉ PERMETTANT DE PRODUIRE UNE VUE DANS UN RÉTROVISEUR DE L'ENVIRONNEMENT D'UN VÉHICULE

(30) Priorität: 14.09.2016 DE 102016217488
(43) Veröffentlichungstag der Anmeldung: 24.07.2019
(73) Patentinhaber: Robert Bosch GmbH, 70442 Stuttgart (DE)
(72) Erfinder: CANO, Raphael, 70180 Stuttgart (DE); VUJICIC, Milica, 70825 Korntal-Muenchingen (DE); MITROVIC, Aleksandra, Villanova, PA 19085 (US)
(86) Internationale Anmeldenummer: PCT/EP2017/067808
(87) Internationale Veröffentlichungsnummer: WO 2018/050315

(56) Entgegenhaltungen:
- DE-A1-102014 201 801
- JP-A- 2007 158 426
- US-A1- 2004 260 469
- US-A1- 2008 129 756
- US-A1- 2013 033 602
- US-A1- 2014 347 450

## Beschreibung

### Stand der Technik

Die vorliegende Erfindung betrifft ein Verfahren zum Bereitstellen einer Rückspiegelansicht einer Fahrzeugumgebung eines Fahrzeuges.

Bei der Konstruktion neuer Fahrzeuge ist es heutzutage ein wichtiger Faktor, die Kosten für die Herstellung des Fahrzeugs gering zu halten. Zudem wird es zunehmend wichtiger, die Energieeffizienz des Fahrzeugs bei dessen Betrieb zu erhöhen, um den Anforderungen des Umweltschutzes gerecht zu werden. Dies führt dazu, dass bspw. auf Außenspiegel an Fahrzeugen verzichtet wird, um das Fahrzeug besonders aerodynamisch zu gestalten. So erhöhen die Außenspiegel einen aerodynamischen Widerstand eines Fahrzeuges bspw. um 2 bis 7 %.

Damit auf einen Außenspiegel verzichtet werden kann, werden Kameras an dem Fahrzeug angeordnet, die entsprechend ausgerichtet sind, um den relevanten Bereich zu erfassen. Das Bild dieser Kameras wird dem Fahrer eines Fahrzeuges unmittelbar mittels eines Displays angezeigt.

Die Schrift US 2004/260469 A1 offenbart ein Verfahren nach dem Oberbegriff des Anspruchs 1 und Fahrassistenzsystem, welches ein rückwärtiges Bild der Umgebung erfasst und auf einem Display anzeigt. Das Dokument US 2008/129756 A1 offenbart einen Bilderzeugungsapparat eines Fahrzeugs, welcher ein erfasstes rückwärtiges Bild auf einem Monitor darstellt. Die Schrift US 2014/347450 A1 offenbart ein Verfahren zur Darstellung eines dreidimensionalen Bildes einer Umgebung eines Fahrzeugs.

### Offenbarung der Erfindung

Das erfindungsgemäße Verfahren ist in Anspruch 1 definiert.

Die Weitwinkelkamera ist dabei insbesondere eine Kamera eines Surround-View-Systems. Eine Weitwinkelkamera ist eine Kamera, welche mit einem Weitwinkelobjektiv ausgestattet ist, also einem Objektiv, welches insbesondere einen Öffnungswinkel von mehr als 80 Grad aufweisen. Insbesondere ist die Weitwinkelkamera eine Kamera mit einer Fischaugenlinse, welche einen Öffnungswinkel von über 170 Grad aufweist. Die virtuelle Kamera ist keine tatsächliche Kamera, sondern eine Kamera, deren Bild auf rechnerische Weise ermittelt wird. Erfolgt das Erfassen des ersten Bildes mittels mehrerer Weitwinkelkameras, so werden die Einzelbilder der mehreren Weitwinkelkameras zu einem einzigen ersten Bild zusammengefügt. Dieser Vorgang wird auch als Stitching bezeichnet.

Eine Rückspiegelansicht ist eine Ansicht eines Teils der Fahrzeugumgebung, der hinter dem Fahrzeug liegt. Somit ist die Rückspiegelansicht eine Ansicht, die Objekte abbildet, die hinter dem Fahrzeug liegen. Ein Bereich, der hinter dem Fahrzeug liegt, ist ein Bereich, der von einer Position des Fahrers aus gesehen in Richtung des Hecks des Fahrzeuges liegt. In entsprechender Weise ist ein Bereich, der vor dem Fahrzeug liegt, ein Bereich, der aus Sicht des Fahrers des Fahrzeuges in Richtung der Front des Fahrzeuges liegt.

Das zweite Bild umfasst einen Anteil der Bildinformationen des ersten Bildes. Das bedeutet in anderen Worten, dass das zweite Bild nicht alle Bildinformationen des ersten Bildes umfasst, sondern lediglich eine Auswahl dieser Bildinformationen des ersten Bildes, wobei zusätzlich eine Umrechnung der Bildinformationen des ersten Bildes erfolgt, um das entsprechende Sichtfeld der ersten virtuellen Kamera zu errechnen. Es wird somit beispielsweise erreicht, dass die Kameras eines Surround View Systems, welche ohnehin oftmals an modernen Fahrzeugen angeordnet sind, auch für das Erzeugen einer Rückspiegelansicht genutzt werden können. Ferner ist die Nutzung von Weitwinkelkameras zum Erzeugen einer Rückspiegelansicht vorteilhaft, da solche besser in eine Fahrzeugkarosserie integriert werden können, wobei diese dennoch einen hinter dem Fahrzeug gelegenen Bereich gut erfassen können. Dadurch, dass das zweite Bild basierend auf dem ersten Bild errechnet wird, also das erste Bild nicht unmittelbar als Rückspiegelansicht für den Fahrer des Fahrzeuges dargestellt wird, wird zudem eine höhere Flexibilität dahingehend erreicht, dass die Rückspiegelansicht modifiziert werden kann, ohne dass die Ausrichtung der an dem Fahrzeug angeordneten Kamera, hier der Weitwinkelkamera, verändert werden muss. Das erfindungsgemäße Verfahren ist besonders vorteilhaft, da dadurch nicht einsichtige Bereiche in der Ansicht eines Rückspiegels, der sogenannter tote Winkel, eliminiert werden. Somit wird eine Fahrsicherheit erhöht. Aktuelle Rückspiegel weisen einen Winkel von zumeist ungefähr 17 ° auf. Dahingegen kann ein solches Sichtfeld durch die vorgeschlagene Technik erheblich erweitert werden.

Die Unteransprüche zeigen bevorzugte Weiterbildungen der Erfindung.

So ist es vorteilhaft, wenn die erste Position und/oder das Sichtfeld der ersten virtuellen Kamera variabel ist und insbesondere basierend auf einem Zustandsparameter des Fahrzeuges gewählt wird. Der Zustandsparameter des Fahrzeuges ist insbesondere eine Geschwindigkeit, eine gewählte Fahrtrichtung und/oder ein Lenkeinschlag des Fahrzeuges. Auf diese Weise kann eine Rückspiegelansicht optimal an eine Fahrsituation angepasst werden. So wird die Rückspiegelansicht beispielsweise automatisch so angepasst, dass jeweils ein Bereich der Fahrzeugumgebung, der für den Fahrer von Interesse ist, besonders gut abgebildet wird. So könnte bspw. ein Sichtfeld der ersten virtuellen Kamera mit steigender Geschwindigkeit des Fahrzeuges vergrößert oder verkleinert werden. Auch könnte das Sichtfeld der ersten virtuellen Kamera in Richtung des Fahrzeuguntergrundes verschoben werden, wenn eine gewählte Fahrtrichtung eine Rückwärtsfahrt andeutet. Auch könnte das abgebildete Sichtfeld der ersten virtuellen Kamera von dem Fahrzeug weg verschoben werden, wenn ein starker Lenkeinschlag des Fahrzeuges erkannt wird.

Auch ist es vorteilhaft, wenn die erste Position und/oder das Sichtfeld der ersten virtuellen Kamera basierend auf einer Eingabe eines Anwenders gewählt wird. Auf diese Weise kann bspw. ein Fahrer des Fahrzeuges die von ihm bevorzugte Rückspiegelansicht auswählen. Auf diese Weise kann eine Rückspiegelansicht, ähnlich zu einem herkömmlichen Rückspiegel, angepasst werden.

Des Weiteren ist es vorteilhaft, wenn das Sichtfeld der ersten virtuellen Kamera derart gewählt ist, dass diese zumindest einen vorgegebenen Bereich der Fahrzeugumgebung abbildet. Der vorgegebene Bereich der Fahrzeugumgebung ist dabei bevorzugt ein Raum, welcher einem vorgeschriebenen Sichtfeld eines Außenspiegels entspricht. Mit anderen Worten wird eine Modifikation des Sichtfeldes der ersten virtuellen Kamera dahingehend beschränkt, dass zumindest ein bestimmter Bereich der Fahrzeugumgebung abgebildet wird, der sich in einer bestimmten Lage gegenüber dem Fahrzeug erstreckt. Ein vorgeschriebenes Sichtfeld des Außenspiegels ist insbesondere ein durch Regulierungen vorgegebenes Sichtfeld. Eine beispielhafte Regulierung ist das Übereinkommen der Vereinten Nationen bezüglich der Ausstattung von Fahrzeugen (bspw. Regulierung Nr. 46 der E/ECE/324/REV.1/ADD.45/). Auf diese Weise wird sichergestellt, dass die bereitgestellte Rückspiegelansicht den Erfordernissen der Verkehrssicherheit zu jedem Zeitpunkt entspricht. Dies war mit herkömmlichen Spiegelsystemen nicht möglich, da eine herkömmliche Rückspiegelansicht nicht nur von der Position des Spiegels an sich, sondern auch von der Kopfposition des Fahrers abhängig war.

Auch ist es vorteilhaft, wenn das Bereitstellen des zweiten Bildes mittels eines Head-up-Displays des Fahrzeuges und/oder eines Monitors im Inneren des Fahrzeuges erfolgt. Insbesondere ist der Monitor im Inneren des Fahrzeuges im Bereich der A-Säule des Fahrzeuges angebracht. Auf diese Weise kann ein herkömmlicher Rückspiegel simuliert werden, mit deren Verwendung potenzielle Fahrer des Fahrzeuges bereits vertraut sind. Das Darstellen des Rückspiegelbildes über einen Head-up-Display des Fahrzeuges ist ebenfalls vorteilhaft, da der Fahrer somit seinen Blick nicht von der Fahrbahn abwenden muss. Trotzdem können die Erfordernisse, die an einen Rückspiegel gestellt werden, weiterhin erfüllt werden. Optional wird das zweite Bild sowohl über einen Head-up-Display des Fahrzeuges als auch über einen Monitor im Inneren des Fahrzeuges abgebildet. Dabei werden optional zwei unterschiedliche zweite Bilder errechnet, die auf jeweils unterschiedlichen Sichtfeldern und/oder ersten Positionen der ersten virtuellen Kamera basieren. Somit kann für jede Darstellung des zweiten Bildes für einen Fahrer eine optimale Rückspiegelansicht gewährt werden.

Des Weiteren ist es vorteilhaft, wenn die erste Position der ersten virtuellen Kamera vor einer Front des Fahrzeuges in der Fahrzeugumgebung liegt, und ein transparentes Modell des Fahrzeuges in das zweite Bild eingefügt wird. Auf diese Weise wird die Fahrzeugumgebung des Fahrzeuges in Relation zu dem Fahrzeug selbst gesetzt. Eine Annäherung des Fahrzeuges an Objekte in der Fahrzeugumgebung kann somit besonders gut durch den Fahrer des Fahrzeuges abgeschätzt werden.

Das erfindungsgemäße Verfahren nach Anspruch 1 umfasst ein Errechnen einer Außenansicht des Fahrzeuges, wobei die Fahrzeugumgebung durch die Bilddaten des ersten Bildes dargestellt wird und das Fahrzeug durch ein 3D-Modell des Fahrzeuges dargestellt wird, wobei als Spiegelfläche des Außenspiegels des 3D-Modells das zweite Bild dargestellt wird. Es wird somit eine Bild-in-Bild-Technik ausgeführt. Die Außenansicht des Fahrzeuges kann für den Fahrer bereitgestellt werden, wobei diese nicht den Beschränkungen einer Rückspiegelansicht unterliegt, sondern bspw. auch ein Bereich, der vor dem Fahrzeug liegt, dargestellt werden kann. Dies ist besonders beim Manövrieren des Fahrzeuges hilfreich. Dadurch, dass das zweite Bild jedoch an einer Stelle des 3D-Modells des Fahrzeuges ebenfalls in der Außenansicht des Fahrzeuges dargestellt wird, bleibt gewährleistet, dass der Fahrer auch einen Bereich hinter dem Fahrzeug im Blick behält. Gleichzeitig wird eine besonders realistische Abbildung der Außenansicht des Fahrzeuges ermöglicht.

Des Weiteren ist es vorteilhaft, wenn das Errechnen des zweiten Bildes basierend auf dem ersten Bild erfolgt, indem das zweite Bild mittels einer zylindrischen Korrektur aus dem ersten Bild errechnet wird. Dies kann bspw. mittels einer Koordinatentransformation erreicht werden. Auf diese Weise kann das zweite Bild besonders schnell mit minimalem Rechenaufwand erzeugt werden. Dies ist vorteilhaft, da auf diese Weise nur eine geringe Zeitverzögerung zwischen dem Erfassen des ersten Bildes und dem Berechnen und Bereitstellen des zweiten Bildes besteht. Es wird somit gewährleistet, dass dem Fahrer eine zeitlich aktuelle Rückspiegelansicht bereitgestellt wird.

Des Weiteren ist es vorteilhaft, wenn das Errechnen des zweiten Bildes basierend auf dem ersten Bild ferner die Schritte umfasst: Übertragen des ersten Bildes auf eine virtuelle Projektionsfläche in einem virtuellen Raum, welcher die Fahrzeugumgebung repräsentiert, wobei die virtuelle Projektionsfläche eine Position, welche einer Lage des Fahrzeuges in dem virtuellen Raum entspricht, zumindest teilweise umläuft, und wobei das erste Bild derart auf die virtuelle Projektionsfläche übertragen wird, dass Objekte, die in dem ersten Bild abgebildet sind, entsprechend ihrer Lage in der Fahrzeugumgebung auf der virtuellen Projektionsfläche abgebildet werden, und Anordnen der ersten virtuellen Kamera in dem virtuellen Raum und Erfassen des zweiten Bildes durch die erste virtuelle Kamera, wobei ein Sichtfeld der ersten virtuellen Kamera derart gewählt ist, dass diese einen Bereich der virtuellen Projektionsfläche abbildet, der in der Fahrzeugumgebung hinter dem Fahrzeug liegt. Der virtuelle Raum ist dabei ein mathematisches Konstrukt, welches die Fahrzeugumgebung repräsentiert. Somit kann jedem Punkt in dem virtuellen Raum ein Punkt in der Fahrzeugumgebung zugeordnet werden. Die virtuelle Projektionsfläche ist derart in den virtuellen Raum angeordnet bzw. aufgespannt, dass diese eine Position, welche einer Lage des Fahrzeuges in dem virtuellen Raum entspricht, zumindest teilweise umläuft. Da der virtuelle Raum die tatsächliche Fahrzeugumgebung wiedergibt, liegt in dem virtuellen Raum ebenfalls ein Bereich vor, der dem Fahrzeug in der Fahrzeugumgebung entspricht. Dieser Bereich wird von der Projektionsfläche zumindest teilweise umlaufen. So kann die Projektionsfläche bspw. die Form einer Schüssel aufweisen, wobei der Bereich des virtuellen Raums, welcher dem Fahrzeug entspricht, innerhalb der Schüssel angeordnet ist. Das erste Bild wird auf die Projektionsfläche übertragen. Dabei ist es besonders vorteilhaft, wenn mehrere Weitwinkelkameras an dem Fahrzeug angeordnet sind, um das erste Bild gemeinsam zu erfassen, damit das erste Bild einen möglichst großen Bereich der Fahrzeugumgebung darstellt, und möglichst weite Bereiche der virtuellen Projektionsfläche genutzt werden, um das erste Bild darzustellen. Um die Objekte, die in dem ersten Bild abgebildet sind entsprechend ihrer Lage in der Fahrzeugumgebung auf der virtuellen Projektionsfläche abzubilden, ist es weiterhin vorteilhaft, die Fahrzeugumgebung durch weitere Sensoren, bspw. Abstandsensoren abzutasten. Die erste virtuelle Kamera wird in dem virtuellen Raum angeordnet. Die erste virtuelle Kamera wird dabei bevorzugt derart in dem virtuellen Raum angeordnet, dass deren Position ebenfalls von der virtuellen Projektionsfläche zumindest teilweise umlaufen wird. Das Sichtfeld der ersten virtuellen Kamera ist derart gewählt, dass diese einen Bereich der virtuellen Projektionsfläche abbildet, der in der Fahrzeugumgebung hinter dem Fahrzeug liegt. Dazu ist eine optische Achse der ersten virtuellen Kamera derart ausgerichtet, dass diese entlang einer Längsachse des Fahrzeuges nach hinten gerichtet ist und nicht weiter als 90 Grad von dieser Längsachse abweicht. Es wird somit eine hohe Flexibilität bei der Wahl der ersten Position der ersten virtuellen Kamera erreicht. Die Rückspiegelansicht kann somit besonders gut an die Bedürfnisse eines Fahrers angepasst werden.

Eine Vorrichtung, die dazu eingerichtet ist, das erfindungsgemäße Verfahren auszuführen, weist alle Vorteile des erfindungsgemäßen Verfahrens auf. Insbesondere ist eine solche Vorrichtung ein Surround-View-System. Da ein solches Surround-View-System bereits über die notwendigen Rechenkapazitäten verfügt und ebenfalls über die notwendigen Kameras verfügt, kann somit auf zusätzliche Hardware verzichtet werden.

### Kurze Beschreibung der Zeichnungen

Nachfolgend werden Ausführungsbeispiele unter Bezugnahme auf die begleitende Zeichnung im Detail beschrieben. In der Beschreibung dargestellte Ausführungen, die nicht unter den Schutzbereich der Ansprüche fallen, dienen der beispielhaften Erläuterung, und sind daher nicht Teil der beanspruchten Erfindung. In der Zeichnung ist:
- Figur 1: ein Fahrzeug mit einer Vorrichtung zum Bereitstellen einer Rückspiegelansicht einer Fahrzeugumgebung des Fahrzeuges gemäß einer ersten Ausführungsform der Erfindung,
- Figur 2: ein beispielhaftes erstes Bild, welches mittels einer Weitwinkelkamera erfasst wurde,
- Figur 3: ein beispielhaftes zweites Bild, welches gemäß der ersten Ausführungsform der Erfindung basierend auf dem ersten Bild errechnet wurde,
- Figur 4: eine beispielhafte Darstellung eines vorgegebenen Bereiches der Fahrzeugumgebung gemäß der ersten Ausführungsform der Erfindung,
- Figur 5: ein beispielhaftes zweites Bild, welches basierend auf dem ersten Bild gemäß einer zweiten Ausführungsform der Erfindung errechnet wurde, und
- Figur 6: eine erfindungsgemäß errechnete Außenansicht des Fahrzeuges gemäß einer dritten Ausführungsform der Erfindung.

### Ausführungsformen der Erfindung

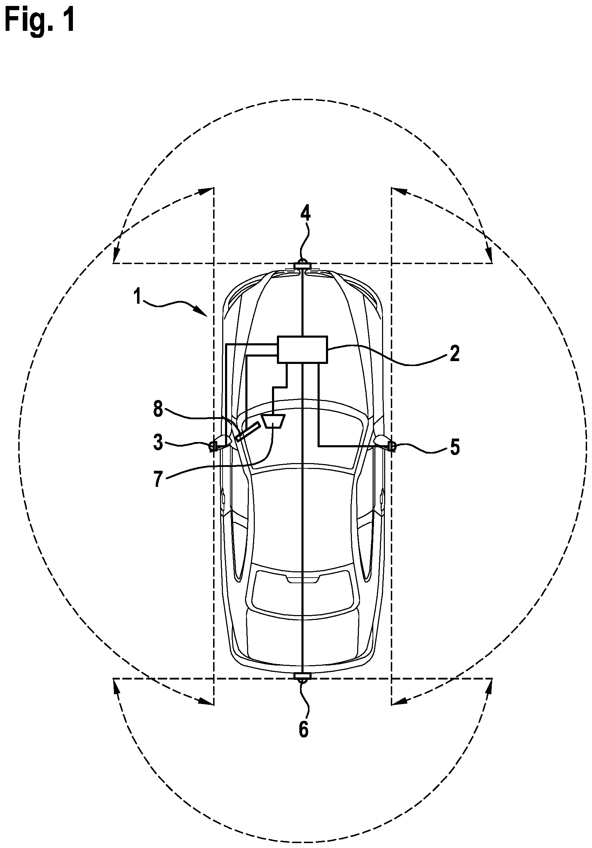

Figur 1 zeigt ein Fahrzeug 1 mit einer Vorrichtung 2 zum Bereitstellen einer Rückspiegelansicht einer Fahrzeugumgebung des Fahrzeuges 1. Die Vorrichtung 2 ist dabei eine Recheneinheit. An der Vorrichtung 2 sind Videoeingänge und Videoausgänge vorgesehen.

An die Videoeingänge der Vorrichtung 2 sind in dieser ersten Ausführungsform der Erfindung eine erste Kamera 3, eine zweite Kamera 4, eine dritte Kamera 5 und eine vierte Kamera 6 angeschlossen. Die erste Kamera 3 ist an einer linken Seite des Fahrzeuges 1 angeordnet und erfasst einen Bereich der Fahrzeugumgebung links neben dem Fahrzeug 1. Die zweite Kamera 4 ist an einer Front des Fahrzeuges 1 angeordnet und erfasst einen Bereich der Fahrzeugumgebung vor dem Fahrzeug 1. Die dritte Kamera 5 ist an einer rechten Seite des Fahrzeuges 1 angeordnet und erfasst einen Bereich der Fahrzeugumgebung rechts neben dem Fahrzeug 1. Die vierte Kamera 6 ist an einem Heck des Fahrzeuges 1 angeordnet und erfasst einen Bereich der Fahrzeugumgebung hinter dem Fahrzeug 1. Die erste Kamera 3 und die dritte Kamera 5 sind dabei jeweils an Halterungen befestigt, welche jeweils anstelle eines Rückspiegels an dem Fahrzeug 1 angeordnet sind. Optional können diese Halterungen tatsächlich einen herkömmlichen Rückspiegel umfassen. Die erste bis vierte Kamera 3 bis 6 ist jeweils mit einem Weitwinkelobjektiv in Form einer Fischaugenlinse ausgestattet, welches einen Öffnungswinkel von 180 Grad aufweist. Die Bereiche der Fahrzeugumgebung, welche von der ersten bis vierten Kamera 3 bis 6 erfasst werden, überschneiden sich. So wird bspw. ein Bereich, der links hinter dem Fahrzeug 1 liegt, sowohl von der ersten Kamera 3 als auch von der vierten Kamera 6 erfasst.

An den Videoausgängen der Vorrichtung 2 sind ein Head-up-Display 7 und ein Monitor 8 angeschlossen. Der Monitor 8 ist dabei im Bereich der rechten A-Säule des Fahrzeuges 1 angeordnet. Der Monitor 8 ist dabei derart angeordnet, dass dieser von einem Fahrer des Fahrzeuges 1 eingesehen werden kann.

Durch die Vorrichtung 2 wird ein Verfahren zum Bereitstellen einer Rückspiegelansicht einer Fahrzeugumgebung des Fahrzeuges 1 ausgeführt.

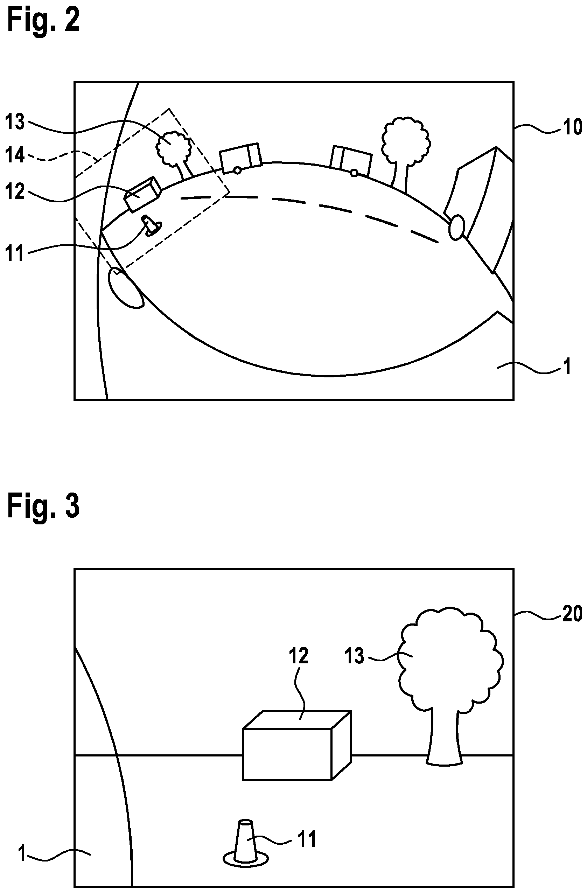

In einem ersten Verfahrensschritt erfolgt ein Erfassen zumindest eines Teiles der Fahrzeugumgebung in einem ersten Bild 10 mittels zumindest einer Weitwinkelkamera, welche an dem Fahrzeug 1 angeordnet ist. In dieser ersten Ausführungsform der Erfindung ist die zumindest eine Weitwinkelkamera die erste Kamera 3. Durch die erste Kamera 3 wird das erste Bild 10 erfasst. Da die erste Kamera 3 mit einem Weitwinkelobjektiv ausgestattet ist, ist das erste Bild 10 eine verzerrte Darstellung der Fahrzeugumgebung. Aufgrund des großen Öffnungsbereiches der ersten Kamera 3 sind Teile des Fahrzeuges 1 in dem ersten Bild 10 sichtbar. Ferner ist in dem in Figur 2 links gelegenen Bereich des ersten Bildes 10 ein Teilbereich 14 sichtbar, der einen Bereich der Fahrzeugumgebung abbildet, der hinter dem Fahrzeug 1 liegt. Ferner ist in dem in Figur 2 rechts gezeigten Bereich des ersten Bildes 10 ein Bereich sichtbar, der in der Fahrzeugumgebung vor dem Fahrzeug 1 liegt. In dem in Figur 2 dargestellten ersten Bild 10 befinden sich hinter dem Fahrzeug 1 mehrere Objekte. So befinden sich in der Fahrzeugumgebung hinter dem Fahrzeug 1 ein Pylon 11, eine Kiste 12 und ein Baum 13. Der Teilbereich 14 ist ein Teilbereich des ersten Bildes 10.

Da die erste Kamera 3 in dieser ersten Ausführungsform an der linken Seite des Fahrzeuges 1 angeordnet ist und einen Bereich der Fahrzeugumgebung links neben dem Fahrzeug 1 erfasst, wird beispielhaft eine linke Rückspiegelansicht errechnet und bereitgestellt. Es ergibt sich, dass eine rechte Rückspiegelansicht in entsprechender Weise errechnet werden kann, wenn das erste Bild alternativ oder zusätzlich von der dritten Kamera 5 erfasst wird.

In dieser ersten Ausführungsform wird das erste Bild 10 lediglich mittels einer einzigen Weitwinkelkamera, nämlich der ersten Kamera 3, erfasst. In alternativen Ausführungsformen wird das erste Bild 10 mittels mehrerer Weitwinkelkameras erfasst. So wird das erste Bild bspw. mittels der ersten bis vierten Kamera 3 bis 6 erfasst. Dazu umfasst der Schritt des Erfassens zumindest eines Teiles der Fahrzeugumgebung einen zusätzlichen Schritt, in dem ein Aneinanderfügen der Einzelbilder der ersten bis vierten Kamera 3 bis 6 erfolgt. Erfindungsgemäß kann das erste Bild 10 aus einer beliebigen Anzahl von Bildern beliebig angeordneter Weitwinkelkameras zusammengefügt werden, solange zumindest eine der Weitwinkelkameras einen Bereich erfasst, der in der Fahrzeugumgebung hinter dem Fahrzeug 1 liegt.

Nachdem das erste Bild 10 in dem ersten Schritt des Verfahrens erfasst wurde, erfolgt in einem zweiten Schritt ein Errechnen eines zweiten Bildes 20 basierend auf dem ersten Bild 10, wobei das zweite Bild 20 einem abgebildeten Sichtfeld einer ersten virtuellen Kamera entspricht, die an einer ersten Position in der Fahrzeugumgebung angeordnet ist und den Teilbereich 14 abbildet, der in der Fahrzeugumgebung hinter dem Fahrzeug 1 liegt. Das zweite Bild 20 ist beispielhaft in Figur 3 abgebildet. Dabei wurde das zweite Bild 20 basierend auf dem in Figur 2 gezeigten beispielhaften ersten Bild 10 errechnet. Es ergibt sich somit, dass die Objekte, die in dem Teilbereich 14 abgebildet sind, ebenfalls in dem zweiten Bild 20 dargestellt sind. So zeigt das zweite Bild 20 ebenfalls den Pylon 11, die Kiste 12 und den Baum 13. Die in dem zweiten Bild 20 dargestellten Objekte sind jedoch nicht verzerrt, wie dies noch in dem ersten Bild 10 der Fall war.

Die erste Position der ersten virtuellen Kamera entspricht in dieser ersten Ausführungsform der Position der ersten Kamera 3. Das von der ersten virtuellen Kamera abgebildete Sichtfeld ist jedoch kleiner als ein Sichtfeld der ersten Kamera 3. Die erste virtuelle Kamera weist nicht die Eigenschaften einer Weitwinkelkamera auf. Somit weist das zweite Bild 20 nicht die Verzerrungen des ersten Bildes 10 auf.

Das Errechnen des zweiten Bildes 20 kann auf unterschiedliche Weisen erfolgen. So wird das zweite Bild 20 bspw. errechnet, indem das zweite Bild 20 mittels einer zylindrischen Korrektur aus dem ersten Bild 10 errechnet wird. Die dafür notwendigen Berechnungsparameter ergeben sich aus den Eigenschaften der Linsen der ersten bis vierten Kamera 3 bis 6 und können der Vorrichtung 2 werkseitig vorgegeben sein. Besonders bevorzugt erfolgt das Errechnen des zweiten Bildes 20 basierend auf einer Koordinatentransformation. Dabei wird jedem Bildpunkt des zweiten Bildes 20 ein zugehöriger Bildpunkt des ersten Bildes 10 zugeteilt. Die Bildinformationen des zweiten Bildes 20 werden Bildpunkt für Bildpunkt aus dem ersten Bild 10 entnommen. Die Zuteilung der Bildpunkte kann mittels der zylindrischen Korrektur vorab berechnet werden.

Bei einer alternativen Vorgehensweise zum Errechnen des zweiten Bildes 20 wird das erste Bild 10 zunächst auf eine virtuelle Projektionsfläche in einem virtuellen Raum übertragen, welcher die Fahrzeugumgebung repräsentiert. Der virtuelle Raum ist dabei ein mathematisches Konstrukt. Der virtuelle Raum repräsentiert die Fahrzeugumgebung. Das bedeutet, dass jedem Punkt in dem virtuellen Raum ein Punkt in der Fahrzeugumgebung zugehörig ist. Die virtuelle Projektionsfläche umläuft dabei zumindest teilweise eine Position, welche einer Lage des Fahrzeuges 1 in dem virtuellen Raum entspricht. Da jedem Punkt in dem virtuellen Raum ein Punkt in der Fahrzeugumgebung zugehörig ist, ergibt sich, dass das Fahrzeug 1 durch ein Volumenelement in dem virtuellen Raum repräsentiert wird. Dieses Volumenelement wird von der Projektionsfläche in dieser Ausführungsform umlaufen. Die virtuelle Projektionsfläche hat in dieser ersten Ausführungsform die beispielhafte Form einer Schüssel. Ein Boden der Schüssel entspricht dabei in der Fahrzeugumgebung einer Fahrbahnoberfläche, auf der das Fahrzeug 1 sich befindet. Eine Wandung der Schüssel umläuft den Volumenbereich des virtuellen Raums, der dem Fahrzeug 1 entspricht. Auf die Innenwandung der Schüssel, also auf die virtuelle Projektionsfläche, wird das erste Bild 10 übertragen. Wird das erste Bild 10 lediglich durch erste Kamera 3 erfasst, so wird lediglich ein Teilbereich der Projektionsfläche mit Bildinformationen texturiert. Wird das erste Bild 10 mittels mehrerer Weitwinkelkameras, bspw. mittels der ersten bis vierten Kamera 3 bis 6 erfasst, kann die Projektionsfläche nahezu vollständig texturiert werden.

Das erste Bild wird derart auf die virtuelle Projektionsfläche übertragen, dass Objekte, die in dem ersten Bild 10 abgebildet sind, entsprechend ihrer Lage in der Fahrzeugumgebung auf die virtuelle Projektionsfläche abgebildet werden. Es ergibt sich somit, dass Objekte, die in der Fahrzeugumgebung vor dem Fahrzeug 1 liegen, auch auf der virtuellen Projektionsfläche vor dem Fahrzeug 1 angeordnet sind. Objekte, die in der Fahrzeugumgebung hinter dem Fahrzeug 1 angeordnet sind, sind auch auf der virtuellen Projektionsfläche in einem Bereich angeordnet, der hinter dem Fahrzeug liegt. Es wird eine die virtuelle Kamera in dem virtuellen Raum angeordnet. Es wurde somit ein virtueller dreidimensionaler Raum errechnet, in dem sich die erste virtuelle Kamera befindet. Die erste virtuelle Kamera ist dabei derart ausgerichtet, dass diese einen Bereich der virtuellen Projektionsfläche erfasst, der zumindest abschnittsweise hinter dem in den virtuellen Raum übertragenen Fahrzeug 1 liegt. Somit zeigt ein Bild der ersten virtuellen Kamera das auf die virtuelle Projektionsfläche gelegte erste Bild 10.

Die erste virtuelle Kamera ist dabei derart ausgerichtet, dass diese einen Bereich der virtuellen Projektionsfläche abbildet, der in der Fahrzeugumgebung hinter dem Fahrzeug 1 liegt. Dies erfolgt, indem eine optische Achse der virtuellen Kamera entsprechend gewählt wird, dass diese ausgehend von der Position der virtuellen Kamera entlang einer Längsachse des Fahrzeuges 1 in Richtung des Fahrzeughecks gerichtet ist und nicht mehr als 90 ° von dieser Längsachse abweicht. Auf diese Weise wird das Sichtfeld der ersten virtuellen Kamera derart gewählt, dass diese einen Bereich der virtuellen Projektionsfläche abbildet, der in der Fahrzeugumgebung hinter dem Fahrzeug 1 liegt. Das Bild der ersten virtuellen Kamera entspricht dem zweiten Bild 20.

Unabhängig davon, wie das zweite Bildes 20 errechnet wird, kann die Position und/oder das Sichtfeld der ersten virtuellen Kamera variabel gewählt werden. Ein Sichtfeld der virtuellen Kamera kann beispielsweise abhängig von einem eingelegten Gang automatisch verändert werden. Ist der Gang auf eine Rückwärtsfahrt geschaltet, wird ein Parkmanöver mit niedriger Geschwindigkeit angezeigt, wobei das Sichtfeld der virtuellen Kamera nach unten bewegt wird. So kann bspw. der in Figur 2 abgebildete Teilbereich 14, der in der Fahrzeugumgebung hinter dem Fahrzeug 1 liegt, variabel gewählt werden. So kann dieser bspw. größer oder kleiner gewählt werden oder dieser kann horizontal oder vertikal verschoben werden. Auf diese Weise wird das Sichtfeld der ersten virtuellen Kamera modifiziert. Dies erfolgt insbesondere basierend auf einem Zustandsparameter des Fahrzeuges 1. So wird bspw. eine Geschwindigkeit des Fahrzeuges 1, eine Fahrtrichtung des Fahrzeuges 1 und/oder ein Lenkeinschlag des Fahrzeuges 1 erfasst. Diese Werte können bspw. von einer Steuerelektronik des Fahrzeuges 1 abgefragt werden. So wird bspw. ein Sichtfeld der ersten virtuellen Kamera und somit der Teilbereich 14 verkleinert, wenn die Geschwindigkeit des Fahrzeuges 1 über einem bestimmten Schwellenwert liegt. Auf diese Weise wird eine Vergrößerung von weit entfernten Objekten erreicht, die bei einer Autobahnfahrt relevanter für den Fahrer sind, als bei einem Einparken des Fahrzeuges. Ferner könnte bei einem starken Lenkeinschlag des Fahrzeuges 1 nach links das Sichtfeld der ersten virtuellen Kamera nach rechts oder links verschoben werden. Diese Verschiebung nach rechts oder links könnte so gewählt werden, dass ein hinter dem Fahrzeug 1 fahrendes weiteres Fahrzeug bei einer Kurvenfahrt weiterhin in einer Rückspiegelansicht, also in dem zweiten Bild 20 sichtbar bleiben, auch wenn das Fahrzeug 11 sich aufgrund einer Kurve um seine Hochachse dreht. Optional könnte das Sichtfeld der ersten virtuellen Kamera in Richtung einer Fahrbahnoberfläche verschoben werden, wenn ein Rückwärtsgang eingelegt wird, also die gewählte Fahrtrichtung rückwärts ist, wodurch bspw. ein Randstein für einen Fahrer des Fahrzeuges 1 besonders gut sichtbar wäre, wenn dieser das Fahrzeug 1 in eine Parklücke manövriert.

Alternativ oder zusätzlich kann die erste Position und/oder das Sichtfeld der ersten virtuellen Kamera, basierend auf einer Eingabe eines Anwenders gewählt werden. So ist bspw. an einer Armatur des Fahrzeuges 1 eine Schaltvorrichtung angeordnet, mit der ein Fahrer des Fahrzeuges 1 den durch das zweite Bild 20 dargestellte Bereich der Fahrzeugumgebung beliebig anpassen kann.

Sowohl bei einem Wählen der Position und/oder des Sichtfeldes der virtuellen Kamera basierend auf einem Zustandsparameter als auch bei dem Wählen basierend auf einer Eingabe eines Anwenders kann optional auch die Position der ersten virtuellen Kamera gewählt werden. So könnte bspw. die erste virtuelle Kamera in dem virtuellen Raum nach unten bewegt werden. Dies ist insbesondere bei einem Parkvorgang des Fahrzeuges 1 hilfreich, um einen Randstein deutlich abzubilden. Bei einer Autobahnfahrt könnte die erste virtuelle Kamera in dem virtuellen Raum nach oben bewegt werden, um weiter entfernte Fahrzeuge deutlicher zu erkennen. Auch ein Verschieben der ersten virtuellen Kamera entlang einer Längsachse des Fahrzeuges oder entlang einer Querachse des Fahrzeuges kann zu einer vorteilhaften Darstellung der Fahrzeugumgebung führen.

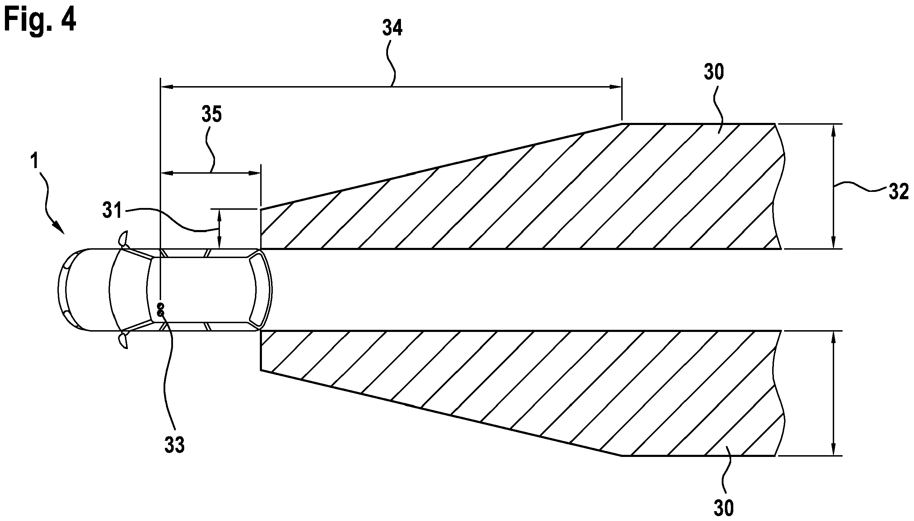

Optional wird dabei überwacht, dass das Sichtfeld der ersten virtuellen Kamera jederzeit derart gewählt ist, dass diese zumindest einen vorgegebenen Bereich 30 der Fahrzeugumgebung abbildet. Dieser vorgegebene Bereich 30 der Fahrzeugumgebung ist bspw. werkseitig vorgegeben. Auf diese Weise wird sichergestellt, dass für das Fahrzeug 1 jederzeit eine gesetzlich vorgeschriebene Rückspiegelansicht zur Verfügung steht. Figur 4 zeigt dazu eine beispielhafte Darstellung eines vorgegebenen Bereiches 30 der Fahrzeugumgebung gemäß der ersten Ausführungsform der Erfindung. Der vorgegebenen Bereich 30 erstreckt sich hinter dem Heck des Fahrzeuges 1. Dabei erweitert sich der vorgegebenen Bereich 30 auf jeder Seite des Fahrzeuges ausgehend von einer ersten Breite 31 (beispielsweise 1 Meter) zu einer zweiten Breite 32. Die zweite Breite ist dabei nach einer ersten Distanz 34 (beispielsweise 20 Meter) hinter einer Sichtposition 33 des Fahrers des Fahrzeuges 1 erreicht. Das Heck des Fahrzeuges liegt eine zweite Distanz 35 (beispielsweise 4 Meter) hinter dieser Sichtposition 33.

Figur 4 ist eine beispielhafte Darstellung einer gesetzlichen Vorgabe für das Sichtfeld eines Rückspiegels. Eine Auswahl des vorgegebenen Bereichs 30 kann bspw. erfolgen, indem Testobjekte entsprechend den gesetzlichen Anforderungen hinter dem Fahrzeug 1 positioniert werden und das zweite Bild 20 durch Auswahl des Teilbereichs 14 derart berechnet wird, dass diese Testobjekte sichtbar sind. Das zweite Bild 20 kann derart von einer tatsächlichen Rückspiegelansicht eines herkömmlichen Rückspiegels abweichen, sodass auch der sogenannte tote Winkel durch das zweite Bild 20 dargestellt wird. Nachdem das zweite Bild 20 errechnet wurde, wird dieses in einem folgenden Verfahrensschritt für eine Anzeige einer Rückspiegelansicht bereitgestellt. Dazu wird in dieser ersten Ausführungsform das zweite Bild 20 über den Videoausgang der Vorrichtung 2 bereitgestellt und über den Monitor 8 dargestellt.

Ferner wird das zweite Bild 20 über den Head-up-Display 7 für den Fahrer des Fahrzeuges 1 dargestellt, wenn ein Zustandsparameter des Fahrzeuges erfüllt ist. So wird in dieser ersten Ausführungsform das zweite Bild 20 immer dann über den Head-up-Display des Fahrzeuges 1 dargestellt, wenn ein Richtungswechsel durch Betätigen des Blinkers des Fahrzeuges 1 angedeutet wird und/oder ein Lenkeinschlag des Fahrzeuges 1 erkannt wird.

Es ist ersichtlich, dass mittels des zuvor beschriebenen Verfahrens sowohl ein Bild für eine Rückspiegelansicht eines linken Spiegels als auch eine entsprechende Rückspiegelansicht eines rechten Spiegels erzeugt werden kann.

Mittels der zuvor beschriebenen Techniken ist es aber ebenso möglich, gänzlich neue Rückspiegelansichten zu generieren. So wird in einer zweiten Ausführungsform der Erfindung die erste Position der ersten virtuellen Kamera derart gewählt, dass diese vor der Front des Fahrzeuges 1 in der Fahrzeugumgebung liegt. Die erste virtuelle Kamera ist in dem virtuellen Raum vor dem Fahrzeug 1 positioniert. Ein entsprechendes Bild kann aber auch ohne rechnerisches darstellen des virtuellen Raums mittels einer Koordinatentransformation erzeugt werden, wenn die Bilder der ersten bis dritten Kamera 3 bis 5 aneinandergefügt werden.

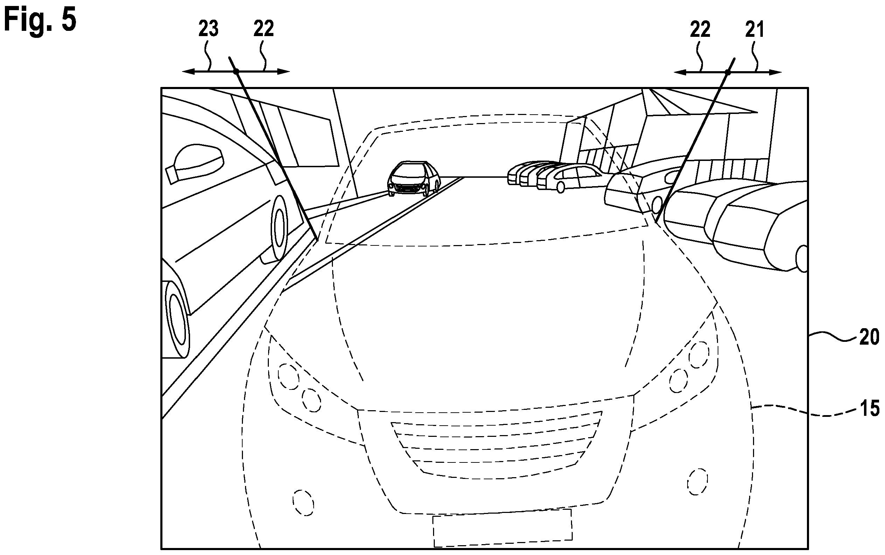

In ein solches Bild der ersten virtuellen Kamera wird ein transparentes Modell 15 des Fahrzeuges 1 eingefügt. Somit wird das transparente Modell 15 des Fahrzeuges 1 in das zweite Bild 20 eingefügt. Dies ist beispielhaft in Figur 5 gezeigt. Dabei können Teilbereiche, die vor dem Fahrzeug 1 liegen durch Bildaufnahmen der zweiten Kamera 4 dargestellt werden. Im Übrigen wird das zweite Bild 20 aus Aufnahmen der ersten Kamera 3, der dritten Kamera 5 und der vierten Kamera 6 zusammengesetzt. Ein erster Bereich 21 zeigt dabei ein Bild der ersten Kamera 3, ein zweiter Bereich 22 zeigt dabei ein Bild der vierten Kamera 6 und ein dritter Bereich 23 zeigt dabei ein Bild der dritten Kamera 5. Zentral in dem zweiten Bild 20 ist das transparente Modell 15 des Fahrzeuges 1 angeordnet. Es wird somit eine zentrale Rückspiegelansicht erzeugt. Im Gegensatz zu herkömmlichen Rückspiegelansichten ist diese nicht spezifisch für eine linke und eine rechte Seite des Fahrzeuges 1 unterschiedlich. Es ist somit besonders vorteilhaft, eine solche zentrale Rückspiegelansicht mittels des Head-up-Displays 7 darzustellen. Alternativ kann ein zusätzlicher zentraler Monitor im Inneren des Fahrzeuges 1 zur Darstellung einer solchen Rückspiegelansicht genutzt werden.

Erfindungsgemäß erfolgt vor dem Bereitstellen des zweiten Bildes 20 ein Errechnen einer Außenansicht 40 des Fahrzeuges 1, wobei die Fahrzeugumgebung durch die Bilddaten des ersten Bildes 10 dargestellt wird und das Fahrzeug 1 durch ein 3D-Modell 41 des Fahrzeuges dargestellt wird. Dabei wird das zweite Bild 20 als eine Spiegelfläche des Außenspiegels 42 des 3D-Modells 41 dargestellt. Dazu wird bspw. eine zweite virtuelle Kamera und das 3D-Modell 41 des Fahrzeuges 1 in dem virtuellen Raum angeordnet. Das Sichtfeld und die Position der zweiten virtuellen Kamera ist frei wählbar und unterliegt nicht den Beschränkungen der ersten virtuellen Kamera. Ist eine Position und ein Sichtfeld der zweiten virtuellen Kamera derart gewählt, dass die Spiegelfläche des Außenspiegels 42 des 3D-Modells 41 in das Sichtfeld der zweiten virtuellen Kamera fällt, so wird das zweite Bild 20 als eine Textur auf die Spiegelfläche des Außenspiegels 42 des 3D-Modells 41 gelegt. Das 3D-Modell 41 des Fahrzeuges 1 kann dabei von einer Form des tatsächlichen Fahrzeuges 1 abweichen, sodass das 3D-Modell auch dann einen Rückspiegel umfassen kann, wenn das Fahrzeug 1 tatsächlich keinen Rückspiegel aufweist. Es wird ein drittes Bild von der zweiten virtuellen Kamera erfasst und bildet die Außenansicht 40 des Fahrzeuges 1. Dieses dritte Bild zeigt somit in einem Teilbereich auch das zweite Bild 20. Das Bereitstellen des zweiten Bildes 20 für eine Anzeige einer Rückspiegelansicht erfolgt, indem das dritte Bild und somit auch das zweite Bild auf dem Monitor 8 im Fahrzeuginneren oder auf dem Head-up-Display 7 des Fahrzeugs 1 dargestellt wird.

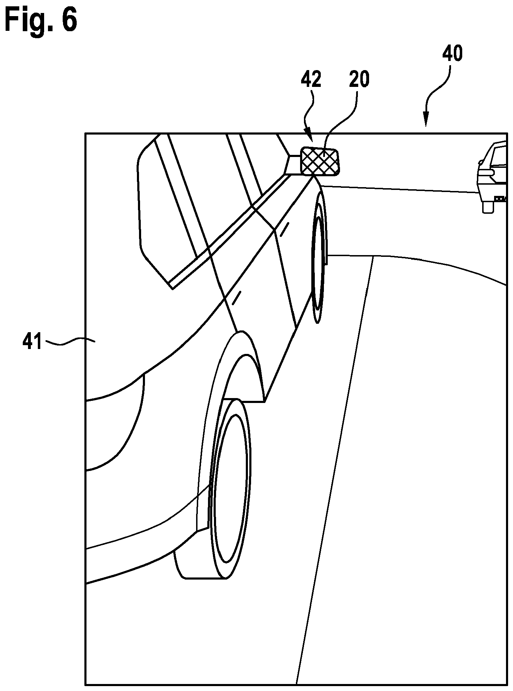

Neben der obigen schriftlichen Offenbarung wird explizit auf die Offenbarung der Figuren 1 bis 6 verwiesen.

## Patentansprüche

1. Verfahren zum Bereitstellen einer Rückspiegelansicht einer Fahrzeugumgebung eines Fahrzeuges (1), umfassend:
- Erfassen zumindest eines Teiles der Fahrzeugumgebung in einem ersten Bild (10) mittels zumindest einer Weitwinkelkamera (3, 4, 5, 6), welche an dem Fahrzeug (1) angeordnet ist,
- Errechnen eines zweiten Bildes (20) basierend auf dem ersten Bild (10), wobei das zweite Bild (20) einem abgebildeten Sichtfeld einer ersten virtuellen Kamera entspricht, die an einer ersten Position in der Fahrzeugumgebung angeordnet ist und einen Bereich abbildet, der in der Fahrzeugumgebung hinter dem Fahrzeug (1) liegt, und
- Bereitstellen des zweiten Bildes (20) für eine Anzeige einer Rückspiegelansicht,
**dadurch gekennzeichnet, dass** das Verfahren ferner folgenden Schritt umfasst
- Errechnen einer Außenansicht (40) des Fahrzeuges (1), wobei die Fahrzeugumgebung durch die Bilddaten des ersten Bildes (10) dargestellt wird und das Fahrzeug (1) durch ein 3D-Modell (41) des Fahrzeuges (1) dargestellt wird, wobei als eine Spiegelfläche eines Außenspiegels (42) des 3D-Modells (41) das zweite Bild (20) dargestellt wird.

2. Verfahren gemäß Anspruch 1, **dadurch gekennzeichnet, dass** die erste Position und/oder das Sichtfeld der ersten virtuellen Kamera variabel ist und insbesondere basierend auf einem Zustandsparameter des Fahrzeuges (1) gewählt wird.

3. Verfahren gemäß einem der voranstehenden Ansprüche, **dadurch gekennzeichnet, dass** die erste Position und/oder das Sichtfeld der ersten virtuellen Kamera basierend auf einer Eingabe eines Anwenders gewählt wird.

4. Verfahren gemäß einem der voranstehenden Ansprüche, **dadurch gekennzeichnet, dass** das Sichtfeld der ersten virtuelle Kamera derart gewählt ist, dass diese zumindest einen vorgegebenen Bereich (30) der Fahrzeugumgebung abbildet.

5. Verfahren gemäß einem der voranstehenden Ansprüche, **dadurch gekennzeichnet, dass** das Bereitstellen des zweiten Bildes (20) mittels eines Head-Up-Displays (7) des Fahrzeugs (1) und/oder eines Monitors (8) im Inneren des Fahrzeuges (1) erfolgt.

6. Verfahren gemäß einem der voranstehenden Ansprüche, **dadurch gekennzeichnet, dass** die erste Position der ersten virtuellen Kamera vor einer Front des Fahrzeuges (1) in der Fahrzeugumgebung liegt, und ein transparentes Modell (15) des Fahrzeuges (1) in das zweite Bild (20) eingefügt wird.

7. Verfahren gemäß einem der voranstehenden Ansprüche, **dadurch gekennzeichnet, dass** das Errechnen des zweiten Bildes (20) basierend auf dem ersten Bild (10) erfolgt, indem das zweite Bild (20) mittels einer zylindrischen Korrektur aus dem ersten Bild errechnet wird.

8. Verfahren gemäß einem der voranstehenden Ansprüche, **dadurch gekennzeichnet, dass** das Errechnen des zweiten Bildes (20) basierend auf dem ersten Bild (10) umfasst:
- Übertragen des ersten Bildes (10) auf eine virtuelle Projektionsfläche in einem virtuellen Raum, welcher die Fahrzeugumgebung repräsentiert,
wobei die virtuelle Projektionsfläche eine Position, welche einer Lage des Fahrzeuges (1) in dem virtuellen Raum entspricht, zumindest teilweise umläuft, und
wobei das erste Bild (10) derart auf die virtuelle Projektionsfläche übertragen wird, dass Objekte, die in dem ersten Bild (10) abgebildet sind, entsprechend ihrer Lage in der Fahrzeugumgebung auf der virtuellen Projektionsfläche abgebildet werden,
- Anordnen der ersten virtuellen Kamera in dem virtuellen Raum und Erfassen des zweiten Bildes (20) durch die erste virtuelle Kamera, wobei ein Sichtfeld der ersten virtuelle Kamera derart gewählt ist, dass diese einen Bereich der virtuellen Projektionsfläche abbildet, der in der Fahrzeugumgebung hinter dem Fahrzeug (1) liegt.

9. Vorrichtung (2) zum Bereitstellen einer Rückspiegelansicht einer Fahrzeugumgebung eines Fahrzeuges (1), **dadurch gekennzeichnet, dass** die Vorrichtung (2) dazu eingerichtet ist, das Verfahren gemäß der voranstehenden Ansprüche auszuführen.

## Claims

1. Method for providing a rear-view-mirror view of the surroundings of a vehicle of a vehicle (1), comprising:
- capturing at least part of the surroundings of the vehicle in a first image (10) by means of at least one wide-angle camera (3, 4, 5, 6) which is arranged on the vehicle (1),
- calculating a second image (20) on the basis of the first image (10), wherein the second image (10) corresponds to a depicted field of vision of a first virtual camera which is arranged at a first position in the surroundings of the vehicle and depicts an area which lies behind the vehicle (1) in the surroundings of the vehicle, and
- providing the second image (20) for a display of a rear-view-mirror view,
**characterized in that** the method comprises the further following step
- calculating an external view (40) of the vehicle (1), wherein the surroundings of the vehicle are displayed by means of the image data of the first image (10), and the vehicle (1) is displayed by means of a 3D model (41) of the vehicle (1), wherein the second image (20) is displayed as a mirror surface of an exterior mirror (42) of the 3D model (41).

2. Method according to Claim 1, **characterized in that** the first position and/or the field of vision of the first virtual camera is a variable and is selected, in particular, on the basis of a condition parameter of the vehicle (1).

3. Method according to one of the preceding claims, **characterized in that** the first position and/or the field of vision of the first virtual camera are/is selected on the basis of an input of a user.

4. Method according to one of the preceding claims, **characterized in that** the field of vision of the first virtual camera is selected in such a way that it depicts at least one predefined area (30) of the surroundings of the vehicle.

5. Method according to one of the preceding claims, **characterized in that** the second image (20) is provided by means of a head-up display (7) of the vehicle (1) and/or by means of a monitor (8) in the interior of the vehicle (1).

6. Method according to one of the preceding claims, **characterized in that** the first position of the first virtual camera is located ahead of a front part of the vehicle (1) in the surroundings of the vehicle, and a transparent model (15) of the vehicle (1) is inserted into the second image (20) .

7. Method according to one of the preceding claims, **characterized in that** the second image (20) is calculated on the basis of the first image (10) **in that** the second image (20) is calculated from the first image by means of a cylindrical correction.

8. Method according to one of the preceding claims, **characterized in that** the calculation of the second image (20) on the basis of the first image (10) comprises:
- transmitting the first image (10) onto a virtual projection surface in a virtual space which represents the surroundings of the vehicle,
wherein the virtual projection surface at least partially runs around a location which corresponds to a position of the vehicle (1) in the virtual space, and
wherein the first image (10) is transferred onto the virtual projection surface in such a way that objects which are depicted in the first image (10) are depicted on the virtual projection surface in accordance with their position in the surroundings of the vehicle,
- arranging the first virtual camera in the virtual space and capturing the first image (20) by means of the first virtual camera, wherein a field of vision of the first virtual camera is selected in such a way that it depicts an area of the virtual projection surface which lie behind the vehicle (1) in the surroundings of the vehicle.

9. Device (2) for providing a rear-view-mirror view of the surroundings of a vehicle (1), **characterized in that** the device (2) is configured to carry out the method according to the preceding claims.

## Revendications

1. Procédé permettant de fournir une vue dans un rétroviseur d'un environnement d'un véhicule (1), comprenant les étapes consistant à :
- acquérir au moins une partie de l'environnement de véhicule dans une première image (10) au moyen d'au moins une caméra grand angle (3, 4, 5, 6) disposée sur le véhicule (1),
- calculer une deuxième image (20) sur la base de la première image (10), la deuxième image (20) correspondant à un champ de vision représenté d'une première caméra virtuelle qui est disposée dans une première position dans l'environnement de véhicule et représente une zone située dans l'environnement de véhicule derrière le véhicule (1), et
- fournir une deuxième image (20) pour afficher une vue dans le rétroviseur,
**caractérisé en ce que** le procédé comprend en outre l'étape suivante consistant à :
- calculer une vue extérieure (40) du véhicule (1), l'environnement de véhicule étant représenté par les données d'image de la première image (10) et le véhicule (1) étant représenté par un modèle 3D (41) du véhicule (1), la deuxième image (20) étant représentée sous forme de surface miroir d'un rétroviseur extérieur (42) du modèle 3D (41).

2. Procédé selon la revendication 1, **caractérisé en ce que** la première position et/ou le champ de vision de la première caméra virtuelle sont variables et sont choisis en particulier sur la base d'un paramètre d'état du véhicule (1).

3. Procédé selon l'une quelconque des revendications précédentes, **caractérisé en ce que** la première position et/ou le champ de vision de la première caméra virtuelle sont choisis sur la base d'une entrée d'un utilisateur.

4. Procédé selon l'une quelconque des revendications précédentes, **caractérisé en ce que** le champ de vision de la première caméra virtuelle est choisi de telle sorte que celle-ci représente au moins une zone spécifiée (30) de l'environnement de véhicule.

5. Procédé selon l'une quelconque des revendications précédentes, **caractérisé en ce que** la fourniture de la deuxième image (20) est effectuée au moyen d'un affichage tête haute (7) du véhicule (1) et/ou d'un moniteur (8) à l'intérieur du véhicule (1).

6. Procédé selon l'une quelconque des revendications précédentes, **caractérisé en ce que** la première position de la première caméra virtuelle est située devant une partie avant du véhicule (1) dans l'environnement de véhicule, et un modèle transparent (15) du véhicule (1) est inséré sur la deuxième image (20).

7. Procédé selon l'une quelconque des revendications précédentes, **caractérisé en ce que** le calcul de la deuxième image (20) est effectué sur la base de la première image (10) **en ce que** la deuxième image (20) est calculée à partir de la première image au moyen d'une correction cylindrique.

8. Procédé selon l'une quelconque des revendications précédentes, **caractérisé en ce que** le calcul de la deuxième image (20) comprend sur la base de la première image (10) :
- la transmission de la première image (10) sur une surface de projection virtuelle dans un espace virtuel représentant l'environnement de véhicule,
la surface de projection virtuelle délimitant au moins en partie une position correspondant à une position du véhicule (1) dans l'espace virtuel, et
la première image (10) étant transmise sur la surface de projection virtuelle de telle sorte que des objets représentés sur la première image (10) sont représentés selon leur position dans l'environnement de véhicule sur la surface de projection virtuelle,
- la disposition de la première caméra virtuelle dans l'espace virtuel et l'acquisition de la deuxième image (20) par la première caméra virtuelle, un champ de vision de la première caméra virtuelle étant choisi de telle sorte que celle-ci représente une zone de la surface de projection virtuelle située derrière le véhicule (1) dans l'environnement de véhicule.

9. Dispositif (2) permettant de fournir une vue dans un rétroviseur d'un environnement d'un véhicule (1), **caractérisé en ce que** le dispositif (2) est aménagé pour effectuer le procédé selon l'une quelconque des revendications précédentes.
